# EUROPEAN PATENT SPECIFICATION

(11) **EP 2 074 790 B1**
(45) Date of publication and mention of the grant of the patent: **12.11.2014**
(21) Application number: 07853608.3
(22) Date of filing: 24.09.2007
(51) Int. Cl.: H04L 29/06

(54) **MEDIA TERMINAL ADAPTER WITH SESSION INITIATION PROTOCOL (SIP) PROXY**
MEDIENENDGERÄTEADAPTER MIT SITZUNGSEINLEITUNGSPROTOKOLL (SIP)-PROXY
ADAPTATEUR DE TERMINAL DE MÉDIA À MANDATAIRE DE PROTOCOLE D'INITIATION DE SESSION

(30) Priority: 26.09.2006 US 535201
(43) Date of publication of application: 01.07.2009
(73) Proprietor: Scientific-Atlanta, LLC, Lawrenceville, GA 30044 (US)
(72) Inventor: MOREMAN, Charles S., Grayson, Georgia 30017 (US); GODLEWSKI, Marcin, Lawrenceville, Georgia 30043 (US)
(74) Representative: Mathys & Squire LLP
(86) International application number: PCT/US2007/079313
(87) International publication number: WO 2008/039721

(56) References cited:
- US-A1- 2005 047 423
- US-B1- 7 103 067
- JAMES DAHL CABLE TELEVISION LABORATORIES ET AL: "Draft new Recommendation J.ipc2arch" ITU-T DRAFT STUDY PERIOD 2005-2008, INTERNATIONAL TELECOMMUNICATION UNION, GENEVA, CH, vol. STUDY GROUP 9, August 2005 (2005-08), pages 1-38, XP017405324

## Description

### FIELD OF THE INVENTION

This invention relates in general to telephony systems over broadband coaxial cable, and more particularly, to the field of enabling a session initiation protocol proxy in a media terminal adapter.

### DESCRIPTION OF THE RELATED ART

Media terminal adapters (MTAs) are the interface to the physical telephony or video equipment required for voice over Internet Protocol (VoIP) transport. Today, Data over Cable Service Interface Specification (DOCSIS) VoIP gateways, or embedded MTAs (EMTAs), which include both an MTA and a cable modem, provide quality of service (QoS) to voice calls that are generated by phones connected directly to the MTA. QoS is used to create quality of service transport guarantees for voice packets dynamically on a per call basis. QoS is used in the networks to ensure low latency and guaranteed bandwidth for voice packets typically using Real Time Protocol (RTP) for each phone call on the DOCSIS network. Since the DOCSIS network can become congested, QoS is used to ensure that VoIP calls are not impacted. When not needed for phone calls, the bandwidth that is not needed by high priority QoS packet flows can be used for lower priority packet flows such as web surfing and e-mail. MTAs using media gateway control protocol (MGCP) make use of significant infrastructure investment in MGCP equipment including support for QoS, MGCP softswitches, and provisioning servers. This infrastructure exists to ensure that MGCP-based phone calls receive preferred quality of service on the DOCSIS network and to control the packet switching of phone calls to MTA phone line endpoints and assign one or more phone numbers to each MTA endpoint.

Users may now use a session initiation protocol (SIP) phone, such as a WiFi (wireless fidelity) phone or a personal computer (PC) based phone. When the SIP-based phones are used with a conventional EMTA or cable modem for VoIP service, the audio phone call is carried over the DOCSIS network without the benefit of using any of the MGCP infrastructure available for MGCP phone calls. More specifically, the SIP-based phone calls face several limitations or restrictions. Users now making a call to or from a SIP-based phone are not able to use QoS so the voice packets from SIP-based phone calls compete with other Internet traffic, such as e-mail or web browsing, for bandwidth.

Therefore, there is a need for a system and method that allows a SIP-based phone connection over the DOCSIS network while maintaining a QoS that is expected by the users.

US 7103067 discloses a system for translating data within a cable network between a first voice-over-IP (VOIP) protocol used by a user agent and a second VOIP protocol used by a call management server. US 2005/0047423 discloses an interworking function node allowing a multimedia session to be established between call terminals using different call management protocols.

Aspects of the invention are set out in the independent claims. Certain preferred features are set out in the dependent claims.

### BRIEF DESCRIPTION OF THE DRAWINGS

The invention can be better understood with reference to the following drawings. The components in the drawings are not necessarily drawn to scale, emphasis instead being placed upon clearly illustrating the principles of the invention. In the drawings, like reference numerals designate corresponding parts throughout the several views.
FIG. 1 illustrates a communications system including a conventional telephone and a PC connected to an MTA for transporting voice and data packets over a communications network.
FIG. 2 illustrates a communications system including the conventional telephone, a SIP-based PC phone, and a WiFi SIP phone connected to an MTA for transporting packets over the communications network.
FIG. 3 illustrates a communications system including the conventional telephone, a SIP-based PC phone, and a WiFi SIP phone connected to an MTA including an SIP to MGCP translator in accordance with the present invention.
FIG. 4 illustrates a processor within the MTA with the SIP to MGCP translator in accordance with the present invention.
FIG. 5 illustrates routing information attached to generated SIP-based signaling packets based on conventional routing information and present invention routing information.

### DETAILED DESCRIPTION OF THE PREFERRED EMBODIMENT

Preferred embodiments of the invention can be understood in the context of a broadband communications system. Note, however, that the invention may be embodied in many different forms and should not be construed as limited to the embodiments set forth herein. All examples given herein, therefore, are intended to be non-limiting and are provided in order to help clarify the description of the invention.

The present invention is directed towards a system and method for transmitting voice packets having QoS that are generated from SIP-based telephones over a DOCSIS communications network. Importantly, the SIP-based phone calls can use network infrastructure designed for MGCP-based phone calls. More specifically, an MTA receives SIP call signaling packets and subsequently translates the SIP call signaling packets into MGCP call signaling packets. The translated MGCP call signaling packets then set up QoS with security for the voice RTP packets. This is advantageous over the conventional method of routing voice packets from SIP-based telephones where the SIP voice packets compete for bandwidth with other Internet traffic and are unable to use the infrastructure that is available to MGCP voice packets. MGCP voice packets that are received from a conventional telephone are also transmitted through the MTA having QoS in a known manner.

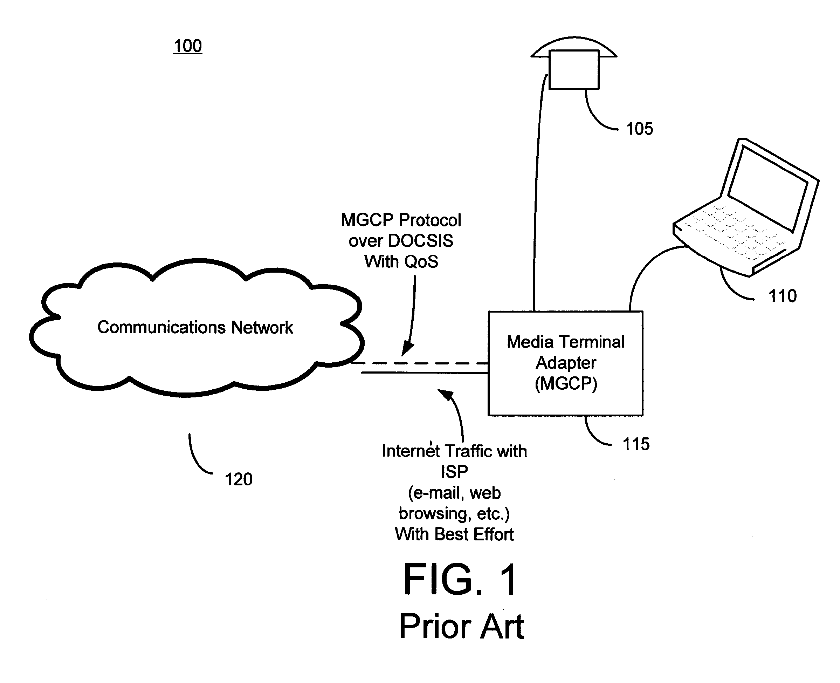

FIG. 1 illustrates a communications system 100 including a conventional telephone 105 and a PC 110 connected to an MTA 115 for transporting voice and data packets over a communications network 120. The telephone 105 is physically connected to the MTA 115 using standard wiring and telephone jacks, such as CAT-3 and RJ11 connectors. Voice signals received from the telephone 105 are packetized by the MTA 115. The voice packets are then transmitted over the communications network 120 using an MGCP protocol over DOCSIS to a cable modem termination system (CMTS). Importantly, the voice packets are transmitted over the communications network 120 having QoS, which is illustrated by the dotted lines between the MTA 115 and the communications network 120.

The PC 110 is generally connected to the MTA 115 with an Ethernet cable and Ethernet plugs and jacks although it may also be connected with a wireless gateway. Data packets are transmitted to and received from the MTA 115. The data packets are transmitted and received from the communications network 120 using Internet addresses in a known manner. The data packets, such as e-mail and web browsing, are transmitted over the communications network 120 with a best effort. In other words, the Internet traffic, which is enabled by an Internet Services Provider (ISP), does not have QoS, which is illustrated by the solid lines between the MTA 115 and the communications network 120.

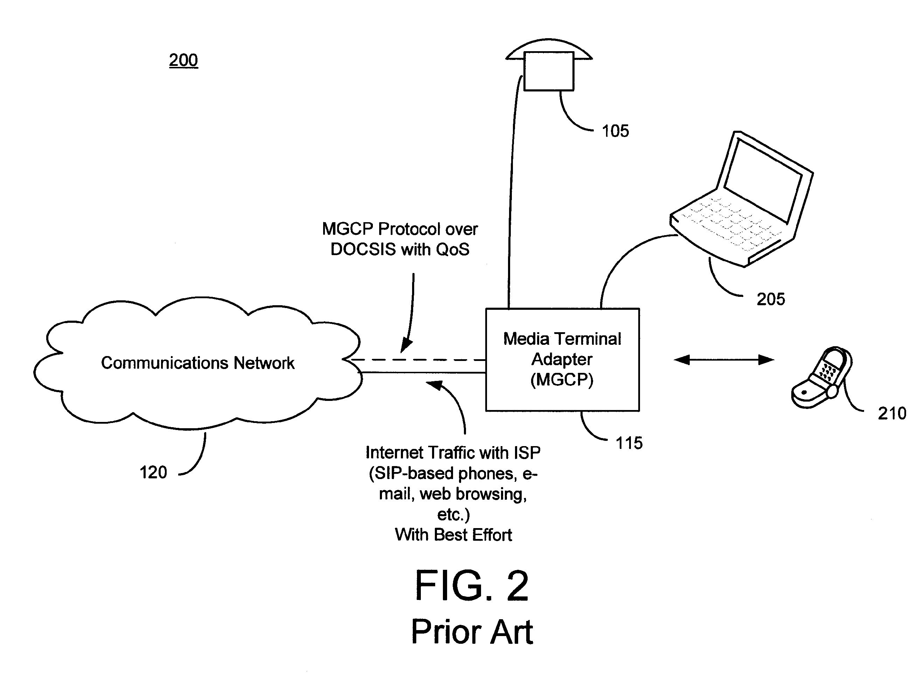

FIG. 2 illustrates a communications system 200 including the conventional telephone 105, a SIP-based PC phone 205, and a WiFi SIP phone 210 connected to the MTA 115 for transporting signaling, voice, and data packets over the communications network 120. The SIP-based signaling packets set up the call; for example, dialing a telephone number and setting up the call by using a session description protocol (SDP), which describes where the voice packets are being transmitted. The voice packets are then transmitted via RTP packets the intended receiver. In this implementation, the signaling, voice, and data packets include a destination Internet address of the intended receiving telephone or computer, and are transmitted over an Ethernet cable to the MTA 115. The MTA 115 then forwards the packets to the communications network 120, which are then combined with all the Internet traffic with only a best effort.

The WiFi SIP phone 210 generates signaling and voice packets, including a destination address of an intended receiving telephone or computer, and are transmitted and received by an antenna (not shown) in the MTA 115. The MTA 115 then forwards the signaling and voice packets to the communications network 120. In this manner, the SIP signaling sets up the call, and the voice packets are then combined with other Internet traffic with only a best effort. Disadvantageously, the voice packets without QoS may be dropped at any time or delayed during the telephone conversation, which degrades the quality of the voice communication heard by both the caller and the receiver.

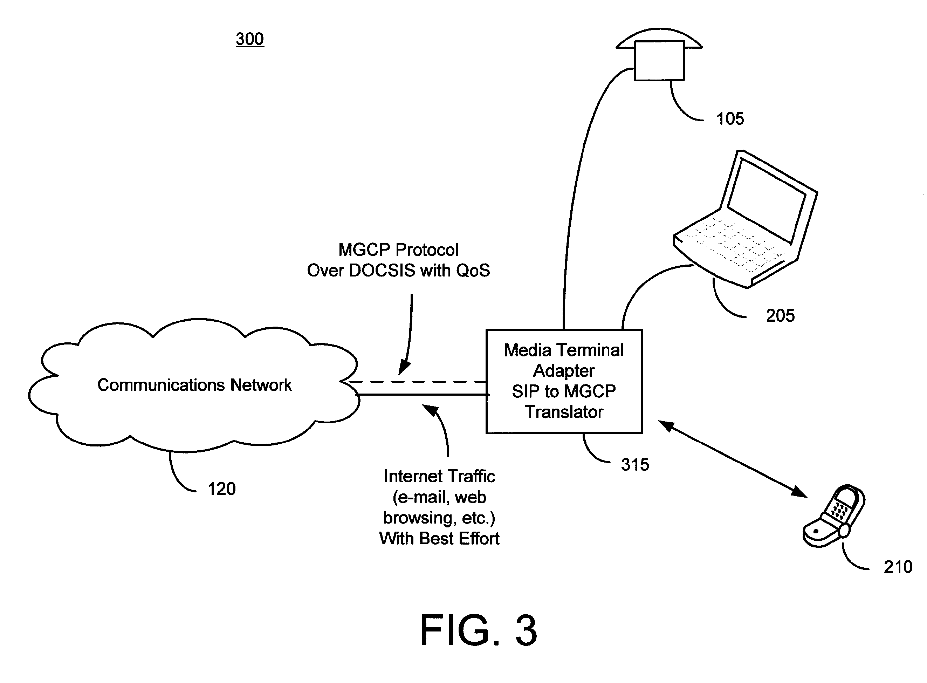

FIG. 3 illustrates a communications system 300 including the conventional telephone 105, the SIP-based PC phone 205, and a WiFi SIP phone 210 connected to an MTA 315, where the MTA 315 includes an SIP to MGCP translator in accordance with the present invention. The telephone 105 transmits MGCP-based signaling packets, and the voice packets are transmitted in the same manner as described above in connection with FIGs. 1 and 2. The SIP-based PC phone 205 generates SIP-based signaling packets that are transmitted to the MTA 315. In accordance with the present invention, the MTA 315 translates the SIP-based signaling packets to MGCP-based signaling packets. The translated MGCP-based signaling packets then set up the call for the voice RTP packets using the MGCP infrastructure including security parameters. The voice RTP packets are subsequently transmitted over DOCSIS with QoS, which is illustrated by the dotted lines connecting the MTA 315 and the communications network 120. SIP-based data signals generated by the PC 205 are routed over the communications network 120 via the MTA 315 with a best effort and are represented as the solid lines. Additionally, SIP-based signaling packets generated by the WiFi SIP phone 210 are transmitted to the MTA 315, which then translates the SIP-based signaling packets to MGCP-based signaling packets. The translated MGCP-based signaling packets then set up the call having QoS for the voice RTP packets, which follows the dotted line connecting the MTA 315 and the communications network 120.

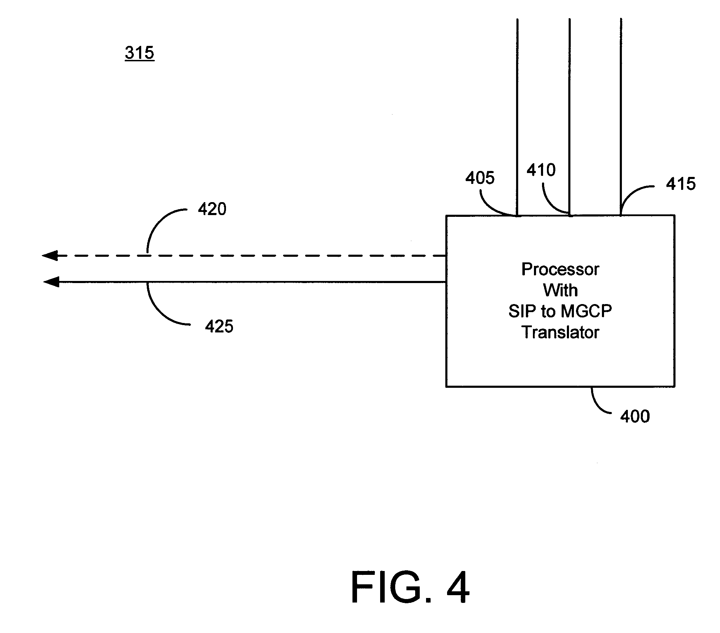

FIG. 4 illustrates a processor 400 within the MTA 315 with the SIP to MGCP translator in accordance with the present invention. The processor 400 includes software and hardware for translating the SIP-based signaling packets into the MGCP-based signaling packets. A first receiver point 405 is coupled to the conventional telephone 105 that is used for generating MGCP-based signaling and voice packets. A second receiver point 410 is coupled to the SIP-based PC phone 205 that receives SIP-based signaling, voice, and data packets. A third receiver point 415 is coupled to the WiFi SIP phone 210 that wirelessly receives SIP-based signaling and voice packets. The SIP-based signaling packets received from both the SIP-based PC phone 205 and the WiFi SIP phone 210 are translated to MGCP-based signaling packets by the SIP to MGCP translator. After translation, the MGCP-based signaling packets then set up the call using the MGCP infrastructure including QoS. The voice packets are associated with the translated MGCP-based signaling packets are routed to the communications network 120 having QoS, which is illustrated by dotted line 420. As mentioned, the data packets continue transmission through the communications network 120 with a best effort, which is illustrated by the solid line 425.

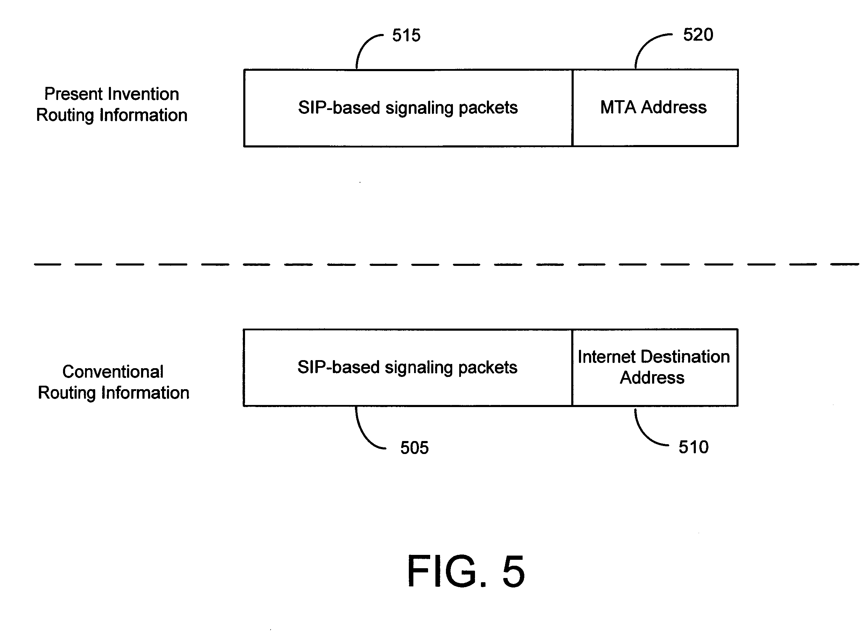

FIG. 5 illustrates routing information attached to generated SIP-based signaling packets based on conventional routing information and present invention routing information. Conventionally, the SIP-based signaling packets 505 include a destination Internet address in attached header information. Accordingly, the SIP-based signaling packets 505 for setting up the call are forwarded via the MTA 115 (FIG. 2) to the intended receiver using the destination Internet address. In this manner, the SIP-based signaling packets 505, and subsequently, the voice packets are routed with only a best effort (i.e., without QoS).

In accordance with the present invention, however, the destination address for generated SIP-based signaling packets 515 now reflects an address associated with the MTA 315. The destination address of the MTA 315 is programmed into the PC 205 and the WiFi phone 210 either by a user of the equipment or a service provider. When the MTA 315 receives the SIP-based signaling packets 515 including its address as the destination, the MTA 315 provides the SIP-based signaling packets 515 to the SIP to MGCP translator 400 for conversion. Subsequently, the translated MGCP-based signaling packets then set up the call using the MGCP infrastructure for the voice packets. The SIP-based data packets 525 from the PC 205 include an Internet destination address 530 so that the MTA 315 continues to forward these packets 525 to the communications network 120 with a best effort.

Accordingly, systems and methods have been provided that allows transmission of SIP-based voice packets having QoS. It will be appreciated that further embodiments are envisioned that implement the invention, for example, using all software or adding modes for additional features and services.

## Claims

1. A media terminal adapter, MTA (315), comprising:
means for receiving packets; and
a SIP to MGCP signaling translator (400);
wherein
the received packets include SIP-based signaling packets having an MTA address associated with the MTA and data packets having an Internet destination address other than the MTA address;
wherein, when the MTA receives SIP-based signaling packets including the MTA address (520), the SIP to MGCP signaling translator is configured to translate the SIP-based signaling packets to MGCP-based signaling packets;
wherein the MTA is further configured to forward the data packets including an Internet destination address (510) other than the MTA address to a communications network (120) without translation;
wherein the translated MGCP-based signaling packets are arranged to set up a call for associated voice packets transmitted with QoS, and wherein the MTA is arranged to transmit the data packets with best effort.

2. The MTA of claim 1, further comprising a processor including software configured to translate the SIP-based signaling packets to the MGCP-based signaling packets.

3. The MTA of claim 1, wherein the SIP-based signaling packets are provided by at least one of a SIP-based personal computer telephone (205) or a SIP-based telephone (210).

4. The MTA of claim 1, wherein the MTA is configured to receive MGCP-based signaling packets having a destination address of an intended receiver from an MGCP telephone, and wherein the MTA is configured to provide the MGCP-based signaling packets to the communications network with QoS.

5. A method of translating SIP-based signaling packets to MGCP-based signaling packets for transmission on a communications network (120), wherein the method comprises the steps of:
receiving at a media terminal adapter, MTA (315), SIP-based signaling packets having an MTA address associated with the MTA and data packets having an Internet destination address other than the MTA address;
translating SIP-based signaling packets to MGCP-based signaling packets upon determining that the SIP-based signaling packets include the MTA address (520); and
forwarding the data packets to a communications network (120) without translation upon determining that the data packets include an Internet destination address (510) other than the MTA address,
wherein the translated MGCP-based signaling packets are arranged to set up a call for associated voice packets transmitted with QoS, and wherein the data packets are transmitted with best effort.

6. The method of claim 5, further comprising the steps of:
generating the SIP-based signaling packets including an address specifying the MTA from at least one of a SIP-based telephone (210) or computer (205); and
transmitting the SIP-based signaling packets to the MTA.

7. The method of claim 5, the steps further comprising:
receiving MGCP-based signaling packets having a destination address from a telephone (105); and
providing the MGCP-based signaling packets to the communications network, wherein the MGCP-based signaling packets have QoS.

8. A communications system (300) for transmitting voice and data packets, the system having means for translating SIP-based signaling packets to MGCP-based signaling packets, wherein the communications system comprises:
a personal computer, PC (205), for generating SIP-based signaling packets having an MTA address associated with a media terminal adapter, MTA, and data packets having an Internet destination address other than the MTA address;
an MTA (315) for receiving the SIP-based signaling packets and the data packets, wherein the MTA is configured to translate the SIP-based signaling packets to MGCP-based signaling packets upon determining that the SIP-based signaling packets include the MTA address (520), and wherein the MTA is configured to forward the data packets to a communications network (120) without translation upon determining that the data packets include an Internet destination address (510) other than the MTA address,
wherein the translated MGCP-based signaling packets are arranged to set up a call for associated voice packets transmitted with QoS, and wherein the system is arranged to transmit the data packets with best effort.

9. The communications system of claim 8, further comprising:
a telephone (105) for generating MGCP-based signaling packets having a receiving destination address, wherein the MTA is configured to forward the MGCP-based signaling packets to the communications network in order to set up a call having QoS.

10. The communications system of claim 8, further comprising:
a SIP-based telephone (205, 210) for generating SIP-based signaling packets including the MTA address, wherein the MTA is configured to translate the SIP-based signaling packets into MGCP-based signaling packets in response to determining that the packets include the MTA address.

11. The communications system of claim 10, wherein the translated SIP-based signaling packets from the telephone are arranged set up a telephone call with QoS.

12. The communications system of claim 10, wherein the SIP-based telephone is at least one of a PC telephone (205), a wired telephone, and a wireless fidelity, WiFi, telephone (210).

13. The communications system of claim 10, wherein the SIP-based telephone is programmed to generate the MTA address (520) with all SIP-based signaling packets.

## Patentansprüche

1. Medienendgerätadapter MTA (315), der Folgendes umfasst:
ein Mittel zum Empfangen von Paketen; und
einen SIP-MGCP-Signalisierungsübersetzer (400);
wobei die empfangenen Pakete Folgendes umfassen: SIPbasierte Signalisierungspakete, die eine MTA-Adresse aufweisen, die dem MTA zugeordnet ist, und Datenpakete, die eine Internet-Zieladresse aufweisen, die sich von der MTA-Adresse unterscheidet;
wobei, wenn der MTA SIP-basierte Signalisierungspakete empfängt, die die MTA-Adresse (520) enthalten, der SIP-MGCP-Signalisierungsübersetzer dafür konfiguriert ist, die SIPbasierten Signalisierungspakete in MGCP-basierte Signalisierungspakete zu übersetzen;
wobei der MTA ferner dafür konfiguriert ist, die Datenpakete, die eine Internet-Zieladresse (510) umfassen, die sich von der MTA-Adresse unterscheidet, ohne Übersetzung zu einem Kommunikationsnetzwerk (120) weiterzuleiten;
wobei die übersetzten MGCP-basierten Signalisierungspakete dafür ausgelegt sind, eine Verbindung für zugeordnete Sprachpakete aufzubauen, die mit Hilfe von QoS übertragen werden, und wobei der MTA dafür ausgelegt ist, die Datenpakete mit bestem Bemühen zu übertragen.

2. MTA nach Anspruch 1, der ferner einen Prozessor aufweist, der Software umfasst, die dafür konfiguriert ist, die SIP-basierten Signalisierungspakete in die MGCP-basierten Signalisierungspakete zu übersetzen.

3. MTA nach Anspruch 1, wobei die SIP-basierten Signalisierungspakete von mindestens einem SIP-basierten PC-Telefon (205) oder einem SIP-basierten Telefon (210) bereitgestellt werden.

4. MTA nach Anspruch 1, wobei der MTA dafür konfiguriert ist, MGCP-basierte Signalisierungspakete zu empfangen, die eine Zieladresse eines beabsichtigten Empfängers von einem MGCP-Telefon aufweisen, und wobei der MTA dafür konfiguriert ist, die MGCP-basierten Signalisierungspakete dem Kommunikationsnetzwerk mit Hilfe von QoS bereitzustellen.

5. Verfahren zum Übersetzen SIP-basierter Signalisierungspakete in MGCP-basierte Signalisierungspakete zur Übertragung in einem Kommunikationsnetzwerk (120), wobei das Verfahren folgende Schritte umfasst:
Empfangen an einem Medienendgerätadapter, MTA (315), von SIP-basierten Signalisierungspaketen, die eine MTA-Adresse aufweisen, die dem MTA zugeordnet ist, und von Datenpaketen, die eine Internet-Zieladresse aufweisen, die sich von der MTA-Adresse unterscheidet;
Übersetzen der SIP-basierten Signalisierungspakete in MGCP-basierte Signalisierungspakete, nachdem festgestellt wurde, dass die SIP-basierten Signalisierungspakete die MTA-Adresse (520) umfassen; und
Weiterleiten der Datenpakete an ein Kommunikationsnetzwerk (120) ohne Übersetzung, nachdem festgestellt wurde, dass die Datenpakete eine Internet-Zieladresse (510) umfassen, die sich von der MTA-Adresse unterscheidet,
wobei die übersetzten MGCP-basierten Signalisierungspakete dafür ausgelegt sind, eine Verbindung für zugeordnete Sprachpakete aufzubauen, die mit Hilfe von QoS übertragen werden, und wobei die Datenpakete mit bestem Bemühen übertragen werden.

6. Verfahren nach Anspruch 5, das ferner folgende Schritte umfasst:
Erzeugen der SIP-basierten Signalisierungspakete, die eine Adresse umfassen, die den MTA von mindestens einem SIPbasierten Telefon (210) oder Computer (205) spezifiziert; und
Übertragen der SIP-basierten Signalisierungspakete zu dem MTA.

7. Verfahren nach Anspruch 5, wobei die Schritte ferner Folgendes umfassen:
Empfangen MGCP-basierter Signalisierungspakete, die eine Zieladresse von einem Telefon (105) aufweisen; und
Bereitstellen der MGCP-basierten Signalisierungspakete für das Kommunikationsnetzwerk, wobei die MGCP-basierten Signalisierungspakete QoS aufweisen.

8. Kommunikationssystem (300) zum Übertragen von Sprach- und Datenpaketen, wobei das System ein Mittel zum Übersetzen von SIP-basierten Signalisierungspaketen in MGCP-basierte Signalisierungspakete umfasst, wobei das Kommunikationssystem Folgendes umfasst:
einen Personalcomputer, PC (205), der Folgendes erzeugt: SIP-basierte Signalisierungspakete, die eine MTA-Adresse aufweisen, die einem Mediaendgerätadapter, MTA, zugeordnet ist, und Datenpakete, die eine Internet-Zieladresse aufweisen, die sich von der MTA-Adresse unterscheidet;
einen MTA (315) zum Empfangen der SIP-basierten Signalisierungspakete und der Datenpakete, wobei der MTA dafür konfiguriert ist, die SIP-basierten Signalisierungspakete in die MGCP-basierten Signalisierungspakete zu übersetzen, nachdem festgestellt wurde, dass die SIP-basierten Signalisierungspakete die MTA-Adresse (520) umfassen, und wobei der MTA dafür konfiguriert ist, die Datenpakete an ein Kommunikationsnetzwerk (120) ohne Übersetzung weiterzuleiten, nachdem festgestellt wurde, dass die Datenpakete eine Internet-Zieladresse (510) umfassen, die sich von der MTA-Adresse unterscheidet,
wobei die übersetzten MGCP-basierten Signalisierungspakete dafür ausgelegt sind, eine Verbindung für zugeordnete Sprachpakete aufzubauen, die mit Hilfe von QoS übertragen werden, und wobei das System dafür ausgelegt ist, die Datenpakete mit bestem Bemühen zu übertragen.

9. Kommunikationssystem nach Anspruch 8, das ferner Folgendes umfasst:
ein Telefon (105) zum Erzeugen von MGCP-basierten Signalisierungspaketen, die eine Empfangszieladresse aufweisen, wobei der MTA dafür konfiguriert ist, die MGCP-basierten Signalisierungspakete zu dem Kommunikationsnetzwerk weiterzuleiten, um eine Verbindung aufzubauen, die QOS aufweist.

10. Kommunikationssystem nach Anspruch 8, das ferner Folgendes umfasst:
ein SIP-basiertes Telefon (205, 210) zum Erzeugen von SIP-basierten Signalisierungspaketen, die die MTA-Adresse umfassen, wobei der MTA dafür konfiguriert ist, die SIPbasierten Signalisierungspakete in die MGCP-basierten Signalisierungspakete zu übersetzen, als Reaktion auf die Feststellung, dass die Pakete die MTA-Adresse umfassen.

11. Kommunikationssystem nach Anspruch 10, wobei die übersetzten SIP-basierten Signalisierungspakete des Telefons dafür ausgelegt sind, eine Verbindung mit Hilfe von QoS herzustellen.

12. Kommunikationssystem nach Anspruch 10, wobei das SIP-basierte Telefon mindestens ein PC-Telefon (205), ein verdrahtetes Telefon oder ein drahtloses LAN- (WLAN) Telefon (210) ist.

13. Kommunikationssystem nach Anspruch 10, wobei das SIP-basierte Telefon so programmiert ist, dass es die MTA-Adresse (520) mit allen SIP-basierten Signalisierungspaketen erzeugt.

## Revendications

1. Adaptateur MTA (media terminal adapter - adaptateur de terminal de média) (315), comportant :
un moyen permettant de recevoir des paquets ; et
un traducteur de signalisation de protocole SIP en protocole MGCP (400) ;
dans lequel les paquets reçus comprennent des paquets de signalisation à base de protocole SIP ayant une adresse MTA associée à l'adaptateur MTA et des paquets de données ayant une adresse de destination Internet autre que l'adresse MTA ;
dans lequel, quand l'adaptateur MTA reçoit des paquets de signalisation à base de protocole SIP comprenant l'adresse MTA (520), le traducteur de signalisation de protocole SIP en protocole MGCP est configuré à des fins de traduction des paquets de signalisation à base de protocole SIP en paquets de signalisation à base de protocole MGCP ;
dans lequel l'adaptateur MTA est par ailleurs configuré à des fins de transmission des paquets de données comprenant une adresse de destination Internet (510) autre que l'adresse MTA à un réseau de communication (120) sans traduction ;
dans lequel les paquets de signalisation à base de protocole MGCP traduits sont agencés pour établir un appel pour des paquets de voix associés transmis avec une QoS (quality of service - qualité de service), et dans lequel l'adaptateur MTA est agencé pour transmettre les paquets de données dans la mesure du possible.

2. Adaptateur MTA selon la revendication 1, comportant par ailleurs un processeur comprenant un logiciel configuré à des fins de traduction des paquets de signalisation à base de protocole SIP en paquets de signalisation à base de protocole MGCP.

3. Adaptateur MTA selon la revendication 1, dans lequel les paquets de signalisation à base de protocole SIP sont fournis par au moins l'un parmi un téléphone d'ordinateur personnel à base de protocole SIP (205) ou un téléphone à base de protocole SIP (210).

4. Adaptateur MTA selon la revendication 1, dans lequel l'adaptateur MTA est configuré à des fins de réception de paquets de signalisation à base de protocole MGCP ayant une adresse de destination d'un récepteur prévu en provenance d'un téléphone à base de protocole MGCP, et dans lequel l'adaptateur MTA est configuré à des fins de fourniture des paquets de signalisation à base de protocole MGCP au réseau de communication avec une QoS.

5. Procédé de traduction de paquets de signalisation à base de protocole SIP en paquets de signalisation à base de protocole MGCP à des fins de transmission sur un réseau de communication (120), dans lequel le procédé comporte les étapes consistant à :
recevoir au niveau d'un adaptateur MTA (media terminal adapter - adaptateur de terminal de média) (315), des paquets de signalisation à base de protocole SIP ayant une adresse MTA associée à l'adaptateur MTA et des paquets de données ayant une adresse de destination Internet autre que l'adresse MTA ;
traduire des paquets de signalisation à base de protocole SIP en paquets de signalisation à base de protocole MGCP lorsqu'il a été déterminé que les paquets de signalisation à base de protocole SIP comprennent l'adresse MTA (520) ; et
transmettre les paquets de données à un réseau de communication (120) sans traduction lorsqu'il a été déterminé que les paquets de données comprennent une adresse de destination Internet (510) autre que l'adresse MTA,
dans lequel les paquets de signalisation à base de protocole MGCP traduits sont agencés pour établir un appel pour des paquets de voix associés transmis avec une QoS, et dans lequel les paquets de données sont transmis dans la mesure du possible.

6. Procédé selon la revendication 5, comportant par ailleurs les étapes consistant à :
générer les paquets de signalisation à base de protocole SIP comprenant une adresse spécifiant l'adaptateur MTA en provenance d'au moins l'un parmi un téléphone à base de protocole SIP (210) ou un ordinateur (205) ; et
transmettre les paquets de signalisation à base de protocole SIP à l'adaptateur MTA.

7. Procédé selon la revendication 5, les étapes comportant par ailleurs :
l'étape consistant à recevoir des paquets de signalisation à base de protocole MGCP ayant une adresse de destination en provenance d'un téléphone (105) ; et
l'étape consistant à fournir les paquets de signalisation à base de protocole MGCP au réseau de communication, dans lequel les paquets de signalisation à base de protocole MGCP ont une QoS.

8. Système de communication (300) permettant de transmettre des paquets de voix et de données, le système ayant un moyen permettant de traduire des paquets de signalisation à base de protocole SIP en paquets de signalisation à base de protocole MGCP, dans lequel le système de communication comporte :
un PC (personal computer - ordinateur personnel) (205), permettant de générer des paquets de signalisation à base de protocole SIP ayant une adresse MTA associée à un adaptateur MTA (media terminal adapter - adaptateur de terminal de média), et des paquets de données ayant une adresse de destination Internet autre que l'adresse MTA ;
un adaptateur MTA (315) permettant de recevoir les paquets de signalisation à base de protocole SIP et les paquets de données, dans lequel l'adaptateur MTA est configuré à des fins de traduction des paquets de signalisation à base de protocole SIP en paquets de signalisation à base de protocole MGCP lorsqu'il a été déterminé que les paquets de signalisation à base de protocole SIP comprennent l'adresse MTA (520), et dans lequel l'adaptateur MTA est configuré à des fins de transmission des paquets de données à un réseau de communication (120) sans traduction lorsqu'il a été déterminé que les paquets de données comprenant une adresse de destination Internet (510) autre que l'adresse MTA,
dans lequel les paquets de signalisation à base de protocole MGCP traduits sont agencés pour établir un appel pour des paquets de voix associés transmis avec une QoS, et dans lequel le système est agencé pour transmettre les paquets de données dans la mesure du possible.

9. Système de communication selon la revendication 8, comportant par ailleurs :
un téléphone (105) permettant de générer des paquets de signalisation à base de protocole MGCP ayant une adresse de destination de réception, dans lequel l'adaptateur MTA est configuré à des fins de transmission des paquets de signalisation à base de protocole MGCP au réseau de communication afin d'établir un appel ayant une QoS.

10. Système de communication selon la revendication 8, comportant par ailleurs :
un téléphone à base de protocole SIP (205, 210) permettant de générer des paquets de signalisation à base de protocole SIP comprenant l'adresse MTA, dans lequel l'adaptateur MTA est configuré à des fins de traduction des paquets de signalisation à base de protocole SIP en paquets de signalisation à base de protocole MGCP en réponse à l'étape ayant déterminé que les paquets comprennent l'adresse MTA.

11. Système de communication selon la revendication 10, dans lequel les paquets de signalisation à base de protocole SIP traduits en provenance du téléphone sont agencés pour établir un appel téléphonique avec une QoS.

12. Système de communication selon la revendication 10, dans lequel le téléphone à base de protocole SIP est au moins l'un parmi un téléphone de PC (205), un téléphone fixe, et un téléphone à technologie Wi-Fi (210).

13. Système de communication selon la revendication 10, dans lequel le téléphone à base de protocole SIP est programmé pour générer l'adresse MTA (520) avec tous les paquets de signalisation à base de protocole SIP.
